# EUROPEAN PATENT APPLICATION

(11) **EP 4 648 141 A1**
(43) Date of publication of application: **12.11.2025**
(21) Application number: 25174572.5
(22) Date of filing: 06.05.2025
(51) Int. Cl.: H01M 4/66, H01M 10/052, H01M 50/533, H01M 50/534, H01M 50/536

(54) **COMPOSITE SUBSTRATE FOR RECHARGEABLE LITHIUM BATTERY, AND RECHARGEABLE LITHIUM BATTERY INCLUDING THE SAME**

(30) Priority: 10.05.2024 KR 20240061936
(71) Applicant: SAMSUNG SDI CO., LTD., Yongin-si, Gyeonggi-do 17084 (KR)
(72) Inventor: CHA, Jungwook, 17084 Yongin-si, Gyeonggi-do (KR); HWANG, Heeyeon, 17084 Yongin-si, Gyeonggi-do (KR); KIM, Suhyun, 17084 Yongin-si, Gyeonggi-do (KR); LEE, KyuSeo, 17084 Yongin-si, Gyeonggi-do (KR); KWON, Minseok, 17084 Yongin-si, Gyeonggi-do (KR); KANG, Dayoung, 17084 Yongin-si, Gyeonggi-do (KR)
(74) Representative: Michalski Hüttermann & Partner Patentanwälte mbB

(57) **Abstract**

Disclosed are composite substrates and rechargeable lithium batteries. The composite substrate includes a support layer, a first metal layer on a top surface of the support layer, a second metal layer on a bottom surface of the support layer, and at least one tab that is buried between the support layer and at least one of the first and second metal layers. The tab includes a buried portion and an exposed portion.

## Description

### FIELD

Examples of the present disclosure relates to a composite substrate for a rechargeable lithium battery, and a rechargeable lithium battery including the composite substrate.

### BACKGROUND

With the increase in use of batteries using electronic devices, such as, e.g., mobile phones, laptop computers, and electric vehicles, there is a demand for rechargeable batteries with high energy density and high capacity.

A rechargeable lithium battery typically includes a positive electrode, a negative electrode, and an electrolyte, the positive and negative electrodes include an active material in which intercalation and deintercalation are possible, and the battery generates electrical energy caused by oxidation and reduction reactions when lithium ions are intercalated and deintercalated.

### SUMMARY

An example embodiment of the present disclosure includes a composite substrate having desired or improved adhesive force and contact resistance with a tab.

An example embodiment of the present disclosure includes a rechargeable lithium battery including the composite substrate.

According to an embodiment of the invention a composite substrate for a rechargeable lithium battery is provided, wherein the composite substrate comprises a support layer, a first metal layer, a second metal layer, wherein the support layer is arranged in between the first metal layer and the second metal layer, wherein the composite substrate further comprise at least one tab buried between the support layer and at least one of the first and second metal layers, and wherein the tab includes a buried portion and an exposed portion.

The invention is further directed to a rechargeable lithium battery, comprising: the above composite substrate, and a battery cell on the metal layer of the composite substrate.

According to an example embodiment of the present disclosure, the first metal layer is at least partially in direct contact to a first surface of the support layer, and the second metal layer is at least partially in direct contact to a second surface of the support layer.

According to an example embodiment of the present disclosure, a composite substrate for a rechargeable lithium battery may include a support layer, a first metal layer on a top surface of the support layer, a second metal layer on a bottom surface of the support layer, and at least one tab that is buried between the support layer and at least one of the first and second metal layers. The tab may include a buried portion and an exposed portion.

According to an alternative embodiment of the disclosure, the composite substrate further comprises a first functional layer provided between the support layer and the first metal layer; and a second functional layer provided between the support layer and the second metal layer.

In this regard and according to a further example embodiment of the disclosure the first functional layer is at least partially in direct contact to a first surface of the support layer, and the second functional layer is at least partially in direct contact to a second surface of the support layer. Additionally or alternatively, the at least one tab may be arranged between the functional layer and the support layer.

According to an example embodiment of the present disclosure, a composite substrate for a rechargeable lithium battery may include a support layer, a first functional layer on a top surface of the support layer, a first metal layer on a top surface of the first functional layer, a second functional layer on a bottom surface of the support layer, a second metal layer on a bottom surface of the second functional layer, and at least one tab that is buried between the support layer and at least one of the first and second functional layers. The tab may include a buried portion and an exposed portion.

According to an example embodiment of the present disclosure, a rechargeable lithium battery may include a composite substrate that includes a support layer and a metal layer on the support layer, a battery cell on the metal layer, and at least one tab between the metal layer and the support layer.

According to an alternative embodiment of the present disclosure, a rechargeable lithium battery is provided, wherein the composite substrate a composite substrate includes a support layer, a first functional layer on a top surface of the support layer, a first metal layer on a top surface of the first functional layer, a second functional layer on a bottom surface of the support layer, a second metal layer on a bottom surface of the second functional layer, and at least one tab that is buried between the support layer and at least one of the first and second functional layers, the tab including a buried portion and an exposed portion, and wherein the at least one tab is between the functional layer and the support layer.

### BRIEF DESCRIPTION OF DRAWINGS

FIG. 1 illustrates a simplified conceptual diagram showing a rechargeable lithium battery according to an example embodiment of the present disclosure.
FIGS. 2 to 5 illustrate simplified diagrams showing a rechargeable lithium battery according to an example embodiment of the present disclosure.
FIG. 6 illustrates a cross-sectional view showing a rechargeable lithium battery according to an example embodiment of the present disclosure.
FIG. 7 illustrates a plan view showing a composite substrate according to an example embodiment of the present disclosure.
FIG. 8A illustrates a cross-sectional view taken along line A-A' of FIG. 7.
FIG. 8B illustrates a cross-sectional view taken along line A-A' of FIG. 7.
FIG. 9 illustrates a plan view showing a composite substrate according to an example embodiment of the present disclosure.
FIG. 10 illustrates a plan view showing a composite substrate according to an example embodiment of the present disclosure.
FIG. 11 illustrates a plan view showing a composite substrate according to an example embodiment of the present disclosure.
FIG. 12 illustrates a plan view showing a first tab buried in the composite substrate of FIG. 11.
FIG. 13 illustrates a plan view showing a composite substrate according to an example embodiment of the present disclosure.
FIG. 14 illustrates a plan view showing a first tab buried in the composite substrate of FIG. 13.
FIG. 15 illustrates a cross-sectional view showing a rechargeable lithium battery according to an example embodiment of the present disclosure.
FIG. 16 illustrates an enlarged view showing the composite substrate of FIG. 15.

### DETAILED DESCRIPTION OF EMBODIMENTS

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

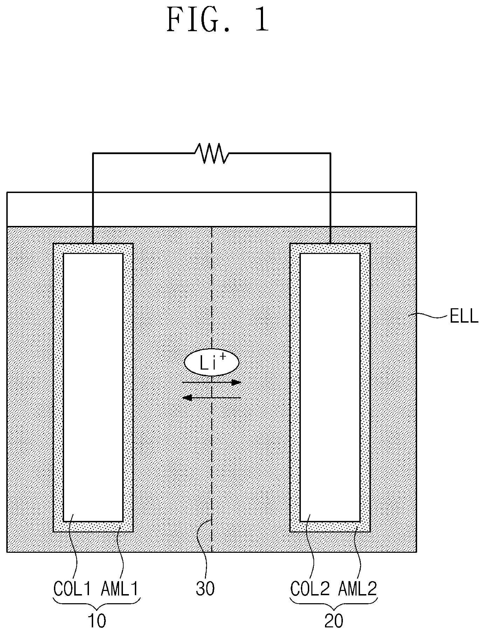

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that can constitute a sacrificial positive electrode.

An amount of the positive electrode active material may be 90 wt% to 99.5 wt% relative to 100 wt% of the positive electrode active material layer AML1. An amount of each of the binder and the conductive material may be 0.5 wt% to 5 wt% relative to 100 wt% of the positive electrode active material layer AML1.

The binder may improve attachment of positive electrode active material particles to each other, and may also improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material without causing chemical change to a battery may constitute the conductive material to constitute the battery. The conductive material may include, for example, at least one of a carbon-based material such as natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may constitute the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal such as one or more of cobalt, manganese, nickel, and a combination thereof.

The composite oxide may include lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{d}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes Ni, Co, Mn, or a combination thereof, X is or includes Al, Ni, Co, Mn, Cr, Fe, Mg, Sr, V, a rare-earth element, or a combination thereof, D is or includes O, F, S, P, or a combination thereof, G is or includes Al, Cr, Mn, Fe, Mg, La, Ce, Sr, V, or a combination thereof, and L¹ is or includes Mn, Al, or a combination thereof.

For example, the positive electrode active material may be or include a high-nickel-based positive electrode active material having a nickel amount that is equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material of 90 wt% to 99 wt%, a binder of 0.5 wt% to 5 wt%, and a conductive material of 0 wt% to 5 wt%.

The binder may improve attachment of negative electrode active material particles to each other, and may also improve attachment of the negative electrode active material to the current collector COL2. The binder may include at least a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder constitutes the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, and Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause a chemical change to a battery may constitute the conductive material to constitute the battery. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or a transition metal oxide.

The material that can reversibly intercalate and deintercalate lithium ions may include a carbon-based negative electrode active material, for example, at least one of crystalline carbon, amorphous carbon, or a combination thereof. For example, the crystalline carbon may include graphite such as at least one of non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal such as at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be located between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on the type of the rechargeable lithium battery, the separator 30 may be present between the positive electrode 10 and the negative electrode 20. The separator 30 may include at least one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, the coating layer including at least an organic material, an inorganic material, or a combination thereof.

The porous substrate may be or include a polymer layer including a polyolefin such as at least one of polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in a coating layer, or may be present as a stack of a coating layer including the organic material and a coating layer including an inorganic material.

### Electrolyte ELL

The electrolyte ELL for the rechargeable lithium battery may include at least a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in combination of two or more.

In addition, when a carbonate-based solvent is used, a cyclic carbonate and a chain carbonate may be mixed and used, and the cyclic carbonate and the chain carbonate may be mixed in a volume ratio of 1:1 to 1:9.

The lithium salt may be or include a material that is dissolved in the non-aqueous organic solvent to constitute a supply source of lithium ions in a battery, enables a basic operation of a rechargeable lithium battery, and promotes the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

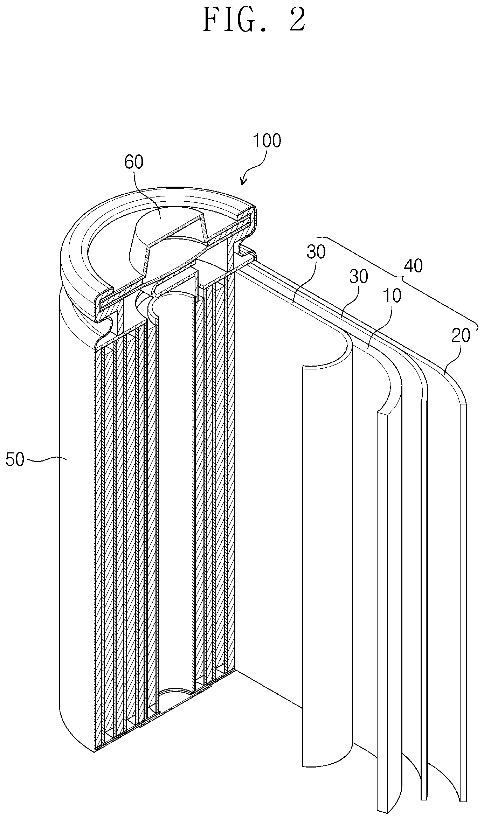

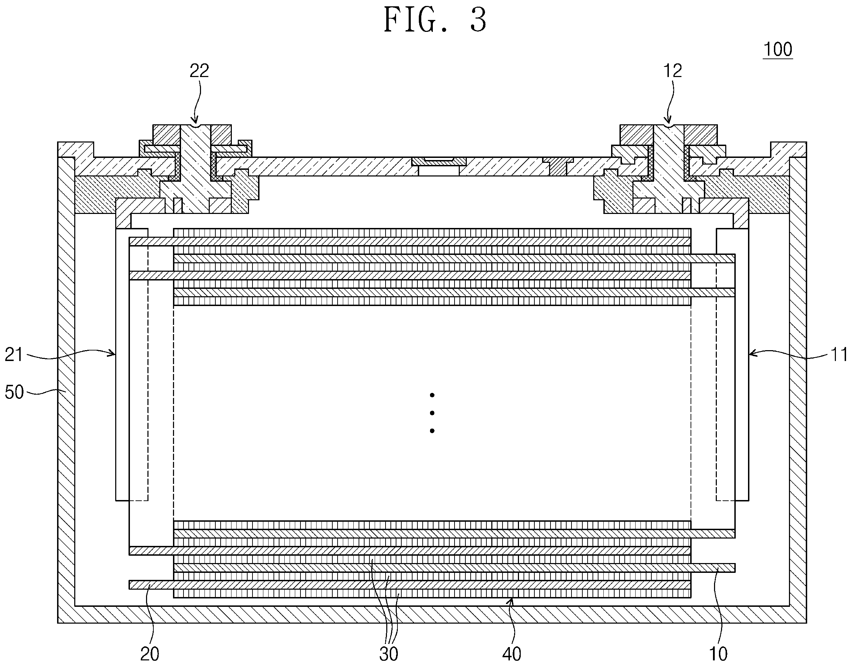

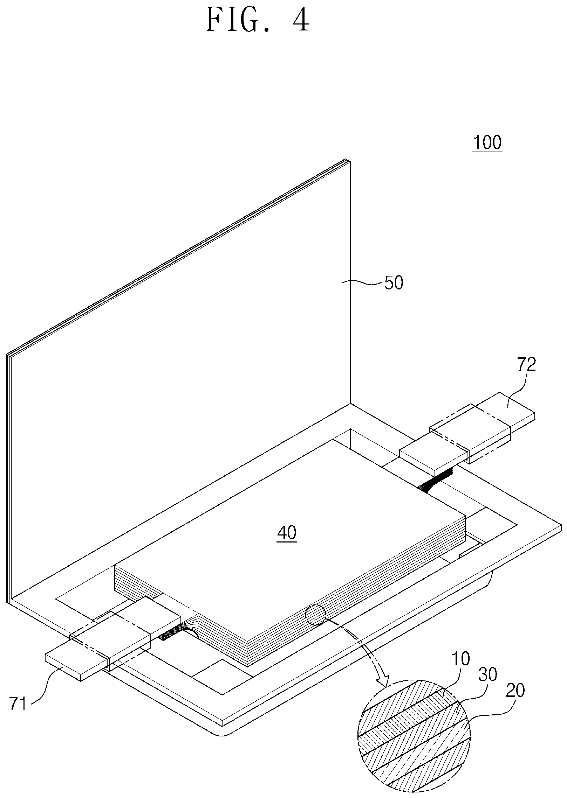

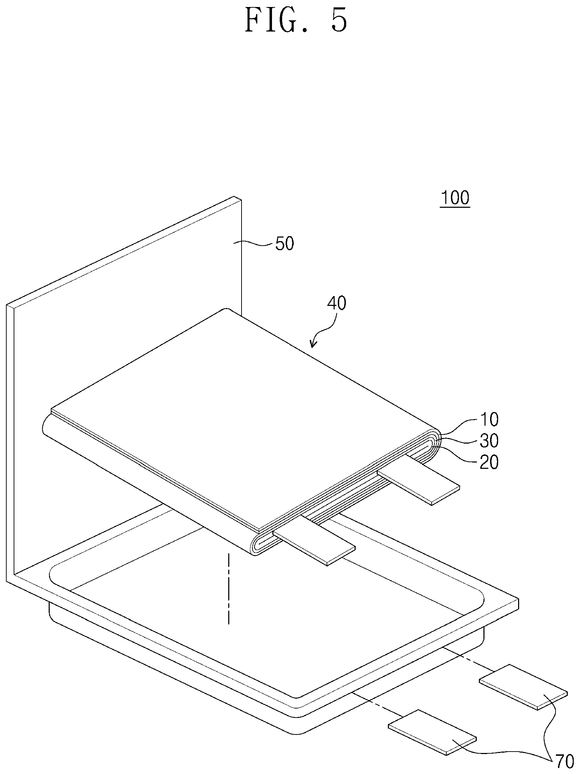

Based on the shape of a rechargeable lithium battery, the rechargeable lithium battery may be classified into cylindrical, prismatic, pouch, and coin type. FIGS. 2 to 5 illustrate simplified diagrams showing a rechargeable lithium battery according to an example embodiment, FIG. 2 showing a cylindrical battery, FIG. 3 showing a prismatic battery, and FIGS. 4 and 5 showing pouch-type batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is held. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, and the electrode tab 70 constitutes an electrical path for externally inducing a current generated in the electrode assembly 40.

In the example embodiments that follow, a detailed description of technical features repetitive to those of the rechargeable lithium battery discussed above with reference to FIGS. 1 to 5 will be omitted, and a difference thereof will be discussed in detail.

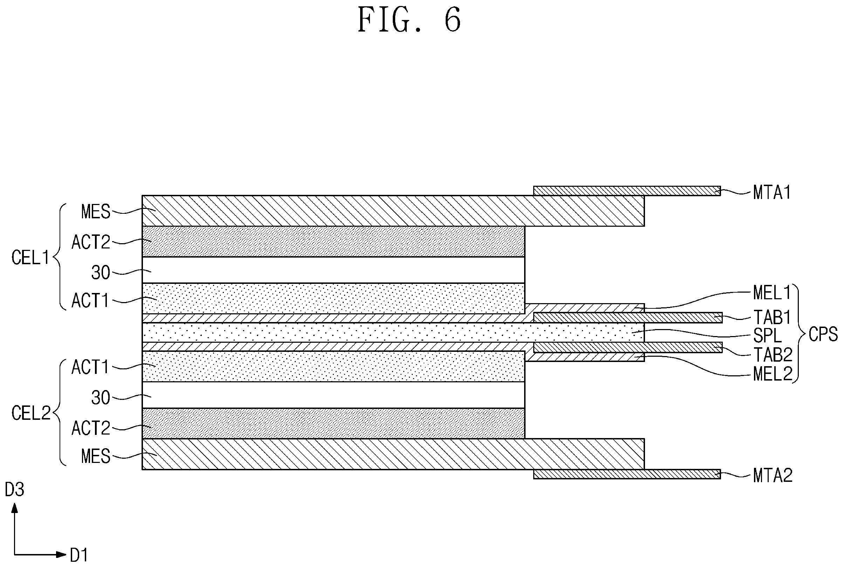

FIG. 6 illustrates a cross-sectional view showing a rechargeable lithium battery according to an embodiment of the present disclosure. FIG. 6, illustrates a composite substrate CPS, a first battery cell CEL1 on one surface of the composite substrate CPS, and a second battery cell CEL2 on another surface of the composite substrate CPS. A single bi-cell may be constituted by the first battery cell CEL1, the second battery cell CEL2, and the composite substrate CPS of FIG. 6. The first battery cell CEL1, the second battery cell CEL2, and the composite substrate CPS of FIG. 6 may constitute the electrode assembly 40 discussed above with reference to FIGS. 2 to 5.

Each of, or one of, the first battery cell CEL1 and the second battery cell CEL2 may include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be one of the positive electrode active material layer AML1 and the negative electrode active material layer AML2 discussed above with reference to FIG. 1. The second active material layer ACT2 may be the other of the positive electrode active material layer AML1 and the negative electrode active material layer AML2 discussed above with reference to FIG. 1. In an example embodiment of the present disclosure, the first active material layer ACT1 may be or include the positive electrode active material layer AML1, and the second active material layer ACT2 may be or include the negative electrode active material layer AML2. The metal substrate MES may be or include the current collector COL1 or COL2 discussed above with reference to FIG. 1.

A first metal tab MTA1 may be provided on one end portion of the metal substrate MES of the first battery cell CEL1, and a second metal tab MTA2 may be provided on one end portion of the metal substrate MES of the second battery cell CEL2. The first metal tab MTA1 may be configured to apply a voltage to the metal substrate MES of the first battery cell CEL1. The second metal tab MTA2 may be configured to apply a voltage to the metal substrate MES of the second battery cell CEL2.

The first and second metal tabs MTA1 and MTA2 may constitute one of positive and negative electrode tabs (or positive and negative electrode lead tabs) discussed above with reference to FIGS. 2 to 5.

The composite substrate CPS may include a support layer SPL, a first metal layer MEL1 provided on a top surface of the support layer SPL, and a second metal layer MEL2 provided on a bottom surface of the support layer SPL. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. Each of, or one of, the first and second metal layers MEL1 and MEL2 of the composite substrate CPS may correspond to one of the current collectors COL1 and COL2 that are discussed above with reference to FIG. 1.

The support layer SPL may include a polymer film. For example, the support layer SPL may include at least one of a polyethylene terephthalate (PET) film, a polyimide (PI) film, a polyethylene (PE) film, a polypropylene (PP) film, a polyvinylidene chloride (PVDC) film, a polystyrene (PS) film, a polyethylene naphthalate (PEN) film, a polytetrafluoroethylene (PTFE) film, a polycarbonate (PC) film, a polyamide (PA) film, or a multiple film including a combination thereof, and may have desired or improved mechanical strength.

Each of the first and second metal layers MEL1 and MEL2 may include at least one of aluminum, aluminum alloys, copper, copper alloys, nickel, nickel alloys, titanium, titanium alloys, iron, iron alloys, silver, and silver alloys.

In an example embodiment of the present disclosure, each of, or one of, the first and second metal layers MEL1 and MEL2 may have a thickness of 200 nm to 5 µm. When the first metal layer MEL1 or the second metal layer MEL2 has an irregular thickness, the thickness thereof is expressed by the thickness of the thickest portion of the first metal layer MEL1 or the second metal layer MEL2.

The support layer SPL may have a thickness of 3 µm to 10 µm. The thickness of the support layer SPL may be greater than the thickness of each of the first and second metal layers MEL1 and MEL2.

The composite substrate CPS may include a first tab TAB1 buried between the first metal layer MEL1 and the support layer SPL. The first tab TAB 1 may be configured to apply a voltage to the first metal layer MEL1.

The composite substrate CPS may include a second tab TAB2 buried between the second metal layer MEL2 and the support layer SPL. The second tab TAB2 may be configured to apply a voltage to the second metal layer MEL2.

Each of, or one of, the first and second tabs TAB1 and TAB2 may constitute the other of positive and negative electrode tabs (or positive and negative electrode lead tabs) discussed above with reference to FIGS. 2 to 5. For example, the first tab TAB1 and the second tab TAB2 may constitute a positive electrode tab.

In an example embodiment of the present disclosure, each of, or one of, the first and second tabs TAB1 and TAB2 may have a thickness of 1 µm to 5 µm, for example, 2 µm to 3 µm.

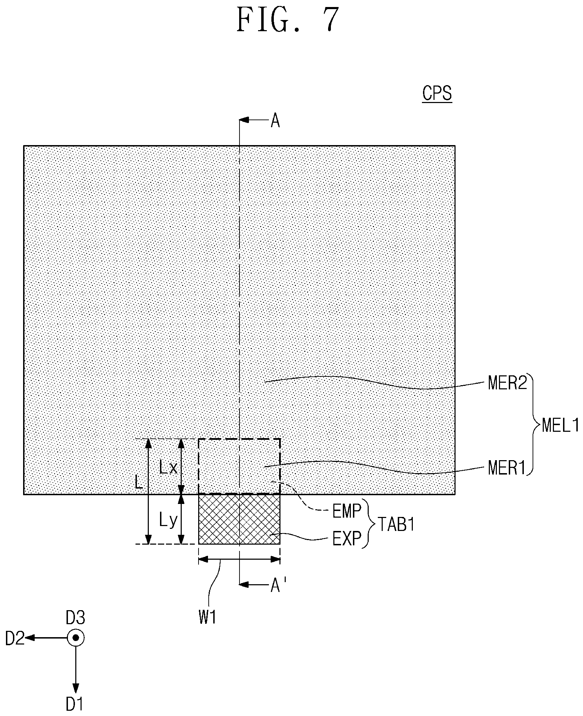

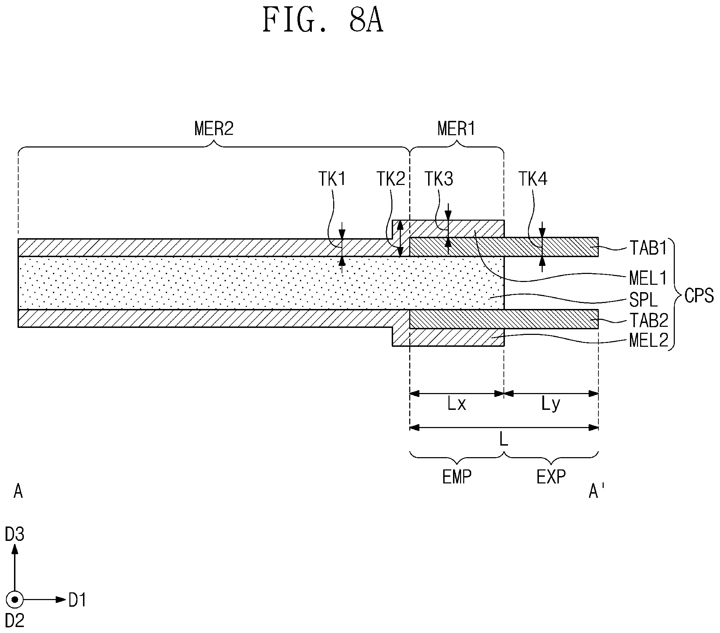

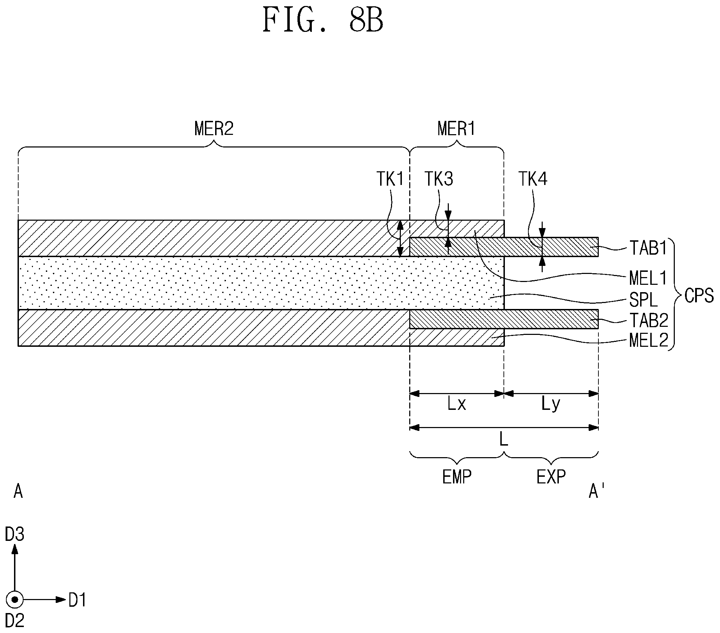

FIG. 7 illustrates a plan view showing a semiconductor device according to some example embodiments of the present disclosure. FIG. 8A illustrates a cross-sectional view taken along line A-A' of FIG. 7. FIG. 8B illustrates a cross-sectional view taken along line A-A' of FIG. 7.

Referring to FIGS. 7 and 8A, each of, or one of, the first and second tabs TAB 1 and TAB2 may include a buried portion EMP and an exposed portion EXP. Each of, or one of, the first and second metal layers MEL1 and MEL2 may include a first region MER1 in which is buried a corresponding one of the first and second tabs TAB 1 and TAB2, and may also include a second region MER2 other than the first region MER1.

In an example embodiment, referring to FIG. 8A, each of, or one of, the first and second metal layers MEL1 and MEL2 may have an irregular thickness in a third direction D3 on the second region MER2.

For example, the first metal layer MEL1 may have a first thickness TK1 in the third direction D3 on the second region MER2 and a second thickness TK2 in the third direction D3 on a section adjacent to the first tab TAB1. The first metal layer MEL1 may have a third thickness TK3 in the third direction D3 on the first region MER1. The first tab TAB1 may have a fourth thickness TK4 in the third direction D3. The second thickness TK2 may be greater than the first thickness TK1. A sum of the third thickness TK3 and the fourth thickness TK4 may be substantially the same as the second thickness TK2.

In an example embodiment, referring to FIG. 8B, each of, or one of, the first and second metal layers MEL1 and MEL2 may have a substantially constant thickness in the third direction D3 on the second region MER2.

For example, the first metal layer MEL1 may have a first thickness TK1 in the third direction D3 on the second region MER2. The first metal layer MEL 1 may have a third thickness TK3 in the third direction D3 on the first region MER1. The first tab TAB1 may have a fourth thickness TK4 in the third direction D3. A sum of the third thickness TK3 and the fourth thickness TK4 may be substantially the same as the first thickness TK1. The first region MER1 may correspond to the buried portions EMP of the first and second tabs TAB1 and TAB2.

Each of, or one of, the first and second tabs TAB1 and TAB2 may have a length L in a first direction D1. In an example embodiment, each of, or one of, the first and second tabs TAB1 and TAB2 may have a length L of 10 mm to 50 mm in the first direction D1. The lengths L of the first tab TAB1 and the second tab TAB2 may have substantially the same configuration.

The buried portion EMP may have a length Lx in the first direction D1. The exposed portion EXP may have a length Ly in the first direction D1. A ratio (Lx/Ly) of the length Lx to the length Ly may range from 0.1 to 10. For example, the ratio (Lx/Ly) may range from 0.2 to 8 or from 0.5 to 2. When the length Lx of the buried portion EMP is less than the ranges of ratio (Lx/Ly) discussed above, a buried tab may have a reduced fixing force and thus may be separated. When the length Ly is greater than the range of ratio (Lx/Ly) discussed above, a reduction in processability may be created in fabrication of electrode plates.

Each of, or one of, the first and second tabs TAB1 and TAB2 may have a width W1 in a second direction D2. In an example embodiment, each of, or one of, the first and second tabs TAB1 and TAB2 may have a width W1 of 5 mm to 30 mm in the second direction D2.

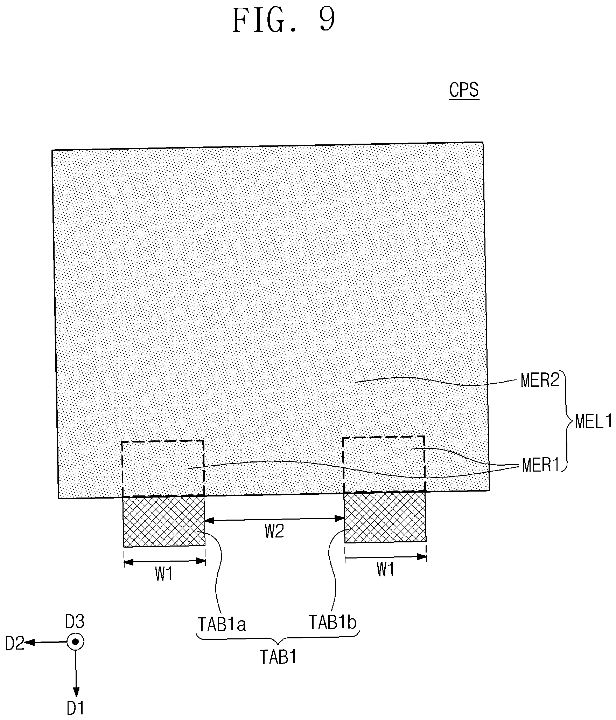

In an example embodiment of the present disclosure, the width W1 may be greater than the length Ly. A ratio (W1/Ly) of the width W1 to the length Ly may be equal to or greater than 1. For example, the ratio (W1/Ly) may range from 1 to 10, from 1 to 5, or from 1 to 2. When the ratio (W1/Ly) is less than 1, a problem of an increase in resistance of a tab may occur. FIG. 9 illustrates a plan view showing a composite substrate according to an example embodiment of the present disclosure.

Referring to FIG. 9, the composite substrate CPS may include two first tabs TAB1a and TAB1b that are buried along the second direction D2 on the first region MER1 of the first metal layer MEL1.

In an example embodiment, the first tabs TABla and TAB1b may be buried spaced apart at an interval W2 along the second direction D2. The interval W2 may range from 20 mm to 50 mm. When the interval W2 is greater than the range above, a current may be concentrated to cause a problem of overheating or damage. When the interval W2 between the first tabs TAB1a and TAB1b is less than the range above, there may be a problem of reduction in current transfer efficiency.

Although not shown, the composite substrate CPS may further include two second tabs TAB2 that are buried along the second direction D2 on the first region MER1 of the second metal layer MEL2. The second tabs TAB2 may be buried spaced apart at the same interval as the interval W2 in the second direction D2 of the two first tabs TABla and TAB1b.

The first tabs TABla and TAB1b and the second tabs TAB2 may have the same or similar configurations as the configurations of the first tab TAB1 and the second tab TAB2, respectively, discussed with reference to FIGS. 7, 8A, and 8B.

Although not shown, the composite substrate CPS may include three or more first tabs TAB1 buried along the second direction D2. In addition, the composite substrate CPS may further include three or more second tabs TAB2 buried along the second direction D2. In an example embodiment, the composite substrate CPS may include four, five, six, or seven each of the first and second tabs TAB1 and TAB2.

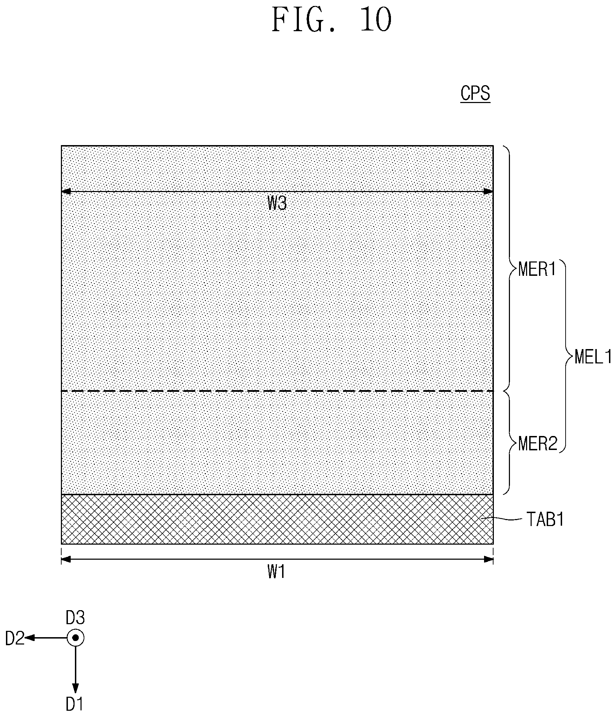

FIG. 10 illustrates a plan view showing a composite substrate according to an example embodiment of the present disclosure.

Referring to FIG. 10, the composite substrate CPS may include a first tab TAB1 buried on the first region MER1 of the first metal layer MEL1.

A buried portion EMP of the first tab TAB1 may extend in the second direction D2. An exposed portion EXP of the first tab TAB1 may extend in the second direction D2.

The first tab TAB1 may have a width W1 in the second direction D2. The buried portion EMP and the exposed portion EXP may have the same width W1.

The width W1 in the second direction D2 of the first tab TAB1 may be substantially the same as a width W3 in the second direction D2 of the first metal layer MEL1.Alternatively, a ratio (W1/W3) of the width W1 to the width W3 may range from 0.8 to 1.

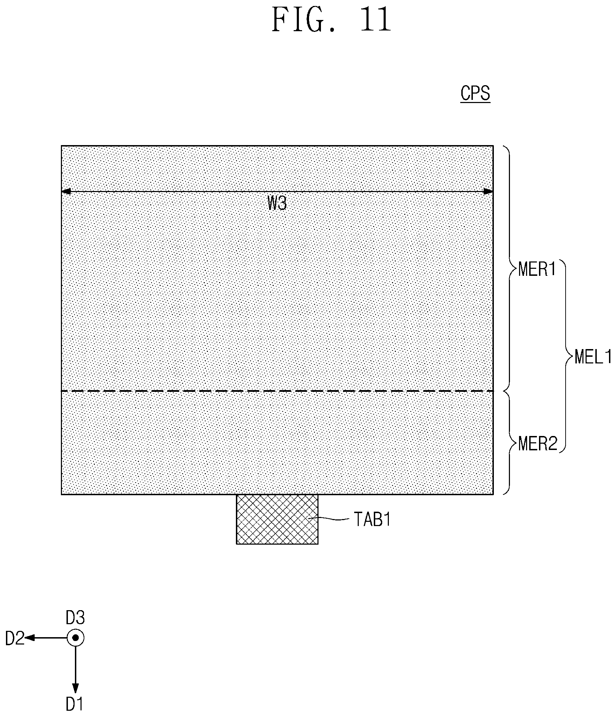

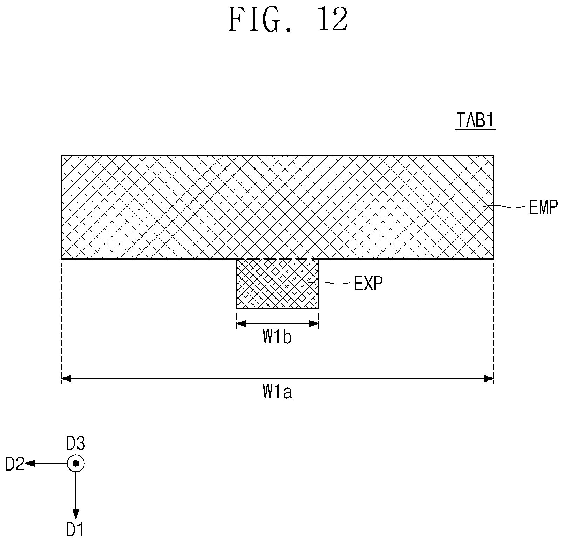

FIG. 11 illustrates a plan view showing a composite substrate according to an example embodiment of the present disclosure. FIG. 12 illustrates a plan view showing a first tab buried in the composite substrate of FIG. 11.

Referring to FIGS. 11 and 12, the composite substrate CPS may include a first tab TAB1 buried on the first region MER1 of the first metal layer MEL1.

The first tab TAB1 may include a buried portion EMP and an exposed portion EXP. A width W1a in the second direction D2 of the buried portion EMP may be greater than a width W1b in the second direction D2 of the exposed portion EXP. The buried portion EMP may extend in the second direction D2. The exposed portion EXP may have a shape that protrudes in the first direction D1 from the buried portion EMP. In an example embodiment, the width W1b in the second direction D2 of the exposed portion EXP may range from 5 mm to 30 mm.

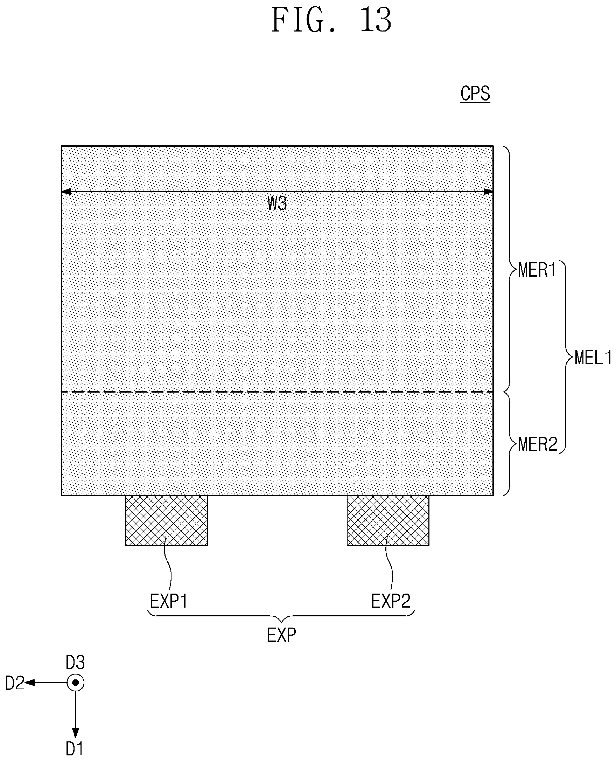

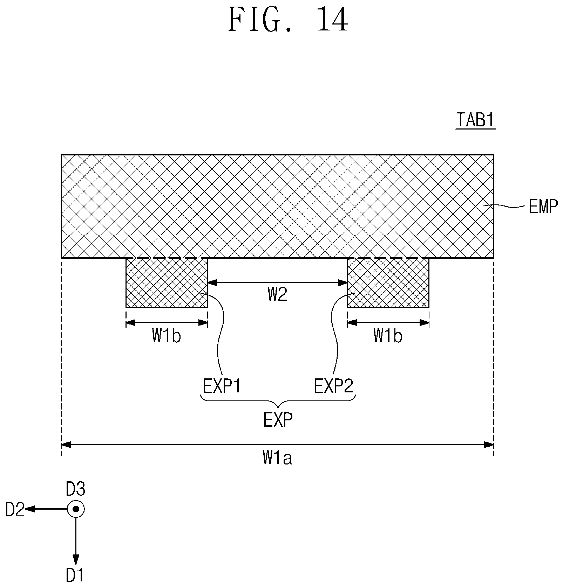

FIG. 13 illustrates a plan view showing a composite substrate according to an example embodiment of the present disclosure. FIG. 14 illustrates a plan view showing a first tab buried in the composite substrate of FIG. 13.

Referring to FIGS. 13 and 14, the composite substrate CPS may include a first tab TAB1 buried on the first region MER1 of the first metal layer MEL1.

The first tab TAB1 may include a buried portion EMP and an exposed portion EXP, and the exposed portion EXP may include a first exposed portion EXP 1 and a second exposed portion EXP2.

A width W1a in the second direction D2 of the buried portion EMP may be substantially the same as a width W3 in the second direction D2 of the first metal layer MEL1.In another example, the ratio of the width W1a to the width W3 may range from 0.8 to 1.

A sum of the widths W1b in the second direction D2 of the first and second exposed portions EXP1 and EXP2 may be less than the width W1a in the second direction D2 of the buried portion EMP.

In an example embodiment, the width W1b in the second direction D2 of each of the first and second exposed portions EXP1 and EXP2 may range from 5 mm to 30 mm.

In an example embodiment, an interval W2 in the second direction D2 between the first and second exposed portions EXP1 and EXP2 may range from 20 mm to 50 mm.

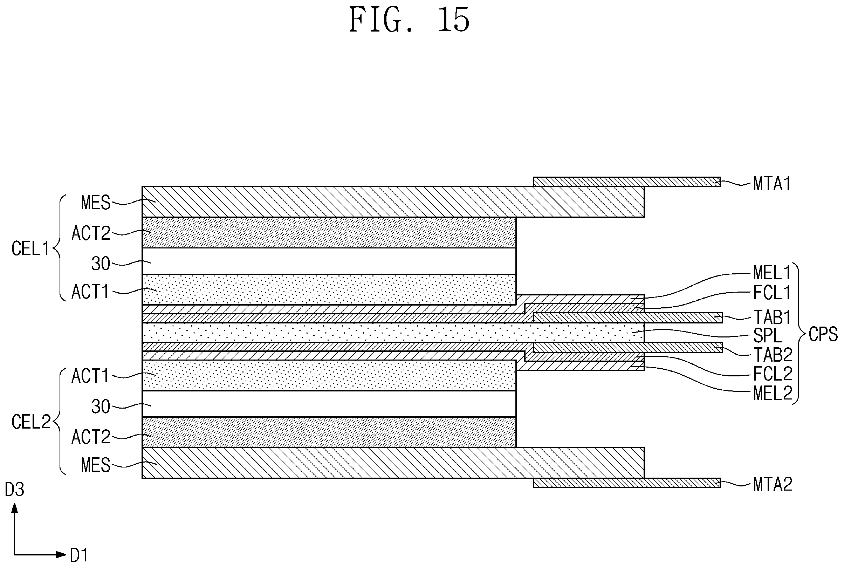

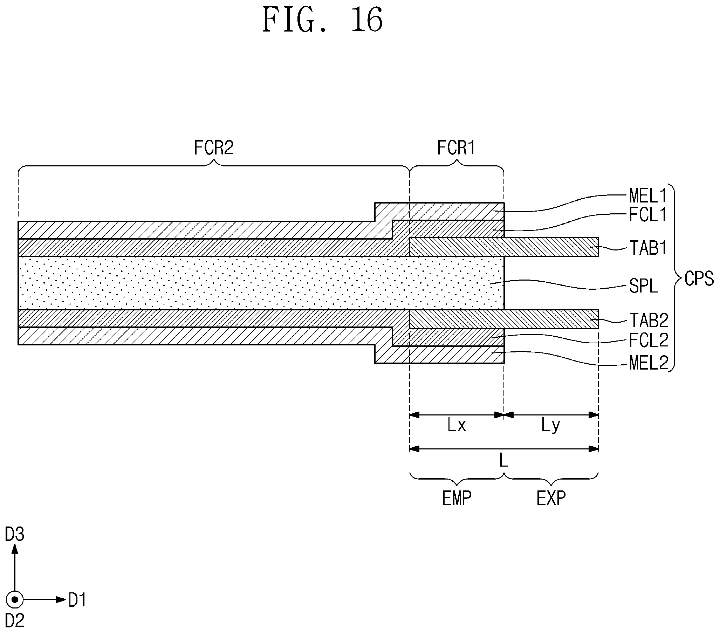

FIG. 15 illustrates a cross-sectional view showing a rechargeable lithium battery according to an example embodiment of the present disclosure. FIG. 16 illustrates an enlarged view showing the composite substrate of FIG. 15.

FIG. 15 illustrates a composite substrate CPS, a first battery cell CEL1 on a surface of the composite substrate CPS, and a second battery cell CEL2 on another surface of the composite substrate CPS. A single bi-cell may be constituted by the first battery cell CEL1, the second battery cell CEL2, and the composite substrate CPS of FIG. 15. The first battery cell CEL1, the second battery cell CEL2, and the composite substrate CPS of FIG. 15 may constitute the electrode assembly 40 discussed above with reference to FIGS. 3 to 5.

The first battery cell CEL1 and the second battery cell CEL2 of FIG. 15 may have the same configuration as the configurations of the first battery cell CEL1 and the second battery cell CEL2 discussed with reference to FIG. 6.

A first metal tab MTA1 may be provided on one end portion of a metal substrate MES of the first battery cell CEL1, and a second metal tab MTA2 may be provided on one end portion of a metal substrate MES of the second battery cell CEL2. The first metal tab MTA1 may be configured to apply a voltage to the metal substrate MES of the first battery cell CEL1. The second metal tab MTA2 may be configured to apply a voltage to the metal substrate MES of the second battery cell CEL2.

The first and second metal tabs MTA1 and MTA2 may constitute one of positive and negative electrode tabs (or positive and negative electrode lead tabs) discussed above with reference to FIGS. 2 to 4.

Referring to FIGS. 15 and 16, the composite substrate CPS may include a support layer SPL, a first functional layer FCL1 provided on a top surface of the support layer SPL, a first metal layer MEL1 provided on a top surface of the first functional layer FCL 1, a second functional layer FCL2 provided on a bottom surface of the support layer SPL, and a second metal layer MEL2 provided on a bottom surface of the second functional layer FCL2.

The support layer SPL, the first metal layer MEL1, and the second metal layer MEL2 of FIG. 16 may have the same configurations as those of the support layer SPL, the first metal layer MEL1, and the second metal layer MEL2, respectively, discussed with reference to FIG. 8.

Each of the first and second functional layers FCL1 and FCL2 may include a first region FCR1 in which a corresponding one of the first and second tabs TAB 1 and TAB2 is buried, and may also include a second region FCR2 other than the first region FCR1.

The first region FCR1 may correspond to the buried portions EMP of the first and second tabs TAB1 and TAB2.

Each of, or one of, the first and second functional layers FCL1 and FCL2 may include an adhesive material. As the first and second functional layers FCL1 and FCL2 include their adhesive material, there may be an improvement in fixing force of the first and second tabs TAB1 and TAB2 buried between the first and second functional layers FCL1 and FCL2. There may be no limitation on a kind of the adhesive material. For example, each of, or one of, the first and second functional layers FCL1 and FCL2 may include an adhesive conductive polymer or an adhesive binder.

In an example embodiment, each of, or one of, the first and second functional layers FCL1 and FCL2 may include at least one of a cellulose-based binder, a rubber-based binder, an acrylate-based binder, an imide-based binder, a polyvinylidene fluoride-based binder, a polyvinylpyrrolidone-based binder, a polyvinyl alcohol-based binder, a nitrile-based binder, an acetate-based binder, and a cyano-based binder.

The cellulose-based binder may include, for example, at least one of carboxy methyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum.

The rubber-based binder may include, for example, at least one of styrene butadiene rubber (SBR), nitrile butadiene rubber (NBR), hydrogenated nitrile butadiene rubber (HNBR), or ethylene propylene diene monomer rubber (EPDM).

The acrylate-based binder may include, for example, at least one of polyacrylic acid (PAA), polymethylmethacrylate, polyisobutylmethacrylate, polyethylacrylate, polybutyl acrylate, or poly(2-ethylhexyl acrylate).

The polyvinylidene fluoride-based binder may include, for example, at least one of poly(vinylidene fluoride) (PVDF), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(vinylidene fluoride-co-trifluorochloroethylene), poly(vinylidene fluoride-co-ethylenefluoride-hexafluoropropylene, or polyvinylidene fluoride-co-trichloroethylene.

The polyvinylpyrrolidone-based binder may include, for example, polyvinylpyrrolidone.

The polyvinyl alcohol-based binder may be, for example, polyvinyl alcohol.

The imide-based binder may include, for example, polyimide or polyamideimide.

The nitrile-based binder may include, for example, polyacrylonitrile or acrylonitrile styrene- butadiene copolymer.

The acetate-based binder may include, for example, at least one of polyvinyl acetate, polyethylene-co-vinyl acetate, cellulose acetate, cellulose acetate butyrate, or cellulose acetate propionate.

The cyano-based binder may include, for example, cyanoethyl sucrose.

Each of, or one of, the first and second functional layers FCL1 and FCL2 may include a carbon material configured to increase an electronic conductivity.

In an example embodiment, each of, or one of, the first and second functional layers FCL1 and FCL2 may include a carbon material including at least one of natural graphite, artificial graphite, carbon black, acetylene black, Ketjen black, carbon fiber, carbon nano-fiber, and carbon nano-tube. Each of, or one of, the first and second functional layers FCL1 and FCL2 may further include the binder mentioned above.

In another example, each of, or one of, the first and second functional layers FCL1 and FCL2 may include a carbon material and a binder. An amount of the binder in each of, or in one of, the first and second functional layers FCL1 and FCL2 may range from 30 wt% to 70 wt%, for example, from 40 wt% to 60 wt%.

Each of, or one of, the first and second functional layers FCL1 and FCL2 may have a thickness of 1 nm to 500 nm, for example, a thickness of 10 nm to 100 nm.

The composite substrate CPS may include at least one first tab TAB1 buried between the first functional layer FCL1 and the support layer SPL. The first tab TAB1 may be in contact with the first functional layer FCL1. The first tab TAB 1 may be in contact with the support layer SPL.

The first tab TAB1 may be configured to apply a voltage to the first functional layer FCL1. The first tab TAB1 may be configured to apply a voltage through the first functional layer FCL1 to the first metal layer MEL1.

The composite substrate CPS may include at least one second tab TAB2 buried between the second functional layer FCL2 and the support layer SPL. The second tab TAB2 may be in contact with the second functional layer FCL2. The second tab TAB2 may be in contact with the support layer SPL.

The second tab TAB2 may be configured to apply a voltage to the second functional layer FCL2. The second tab TAB2 may be configured to apply a voltage through the second functional layer FCL2 to the second metal layer MEL2.

Referring back to FIG. 16, the first and second tabs TAB1 and TAB2 may have the same or a similar configuration as the configuration of the first and second tabs TAB1 and TAB2 discussed above with reference to FIGS. 6 to 8.

Although not shown, the first and second tabs TAB1 and TAB2 of FIGS. 15 and 16 may have the same or a similar configuration as the configuration of one of the first tabs TAB1 discussed above with reference to FIGS. 9 to 14.

The composite substrate CPS according to an example embodiment of the present disclosure may be prepared by the following method. First, the support layer SPL may be prepared as an organic polymer film. An electrode tab may be disposed on the support layer SPL. For example, the first tab TAB1 may be disposed on one surface of the support layer SPL.

A vacuum deposition process or a plating process may be performed to form a metal layer on the one surface of the support layer SPL on which the first tab TAB1 is disposed. For example, the first metal layer MEL1 may be formed on the surface of the support layer SPL on which the first tab TAB1 is disposed.

The same or a similar method may be used to place the second tab TAB2 on another surface of the support layer SPL and to form a metal layer on the other surface of the support layer SPL on which the second tab TAB2 is disposed. For example, the second metal layer MEL2 may be formed on the other surface of the support layer SPL on which the second tab TAB2 is disposed.

As such, the first and second tabs TAB1 and TAB2 may be respectively buried between the support layer SPL and the first and second metal layers MEL1 and MEL2.

In an example embodiment, a vacuum deposition process will be described. The support layer SPL to which a tab is fixed may be loaded into a vacuum deposition chamber. A metal wire in a metal evaporation chamber may be melted and evaporated at a temperature of 1,300°C to 2,000°C. The evaporated metal may pass through a cooling system in the vacuum deposition chamber, and eventually may be deposited on a surface of the support layer SPL. In a case of plating process, the support layer SPL may be provided in a plating solution to form a metal layer on the surface of the support layer SPL.

The composite substrate CPS according to an example embodiment of the present disclosure may be prepared by the following method. First, the support layer SPL may be prepared as an organic polymer film. An electrode tab may be fixed to the support layer SPL. The first tab TAB1 and the second tab TAB2 may be correspondingly fixed to opposite surfaces of the support layer SPL.

In an example embodiment, a conductive adhesive may be used to fix an electrode tab to the support layer SPL.

A slurry coating method may be performed to form a functional layer on the support layer SPL to which the tab is fixed. For example, the first functional layer FCL1 and the second functional layer FCL2 may be correspondingly formed on opposite surfaces of the support layer SPL to which the tab is fixed.

In an example embodiment, a slurry in which a carbon material and a binder are mixed may be coated and dried on the support layer SPL to form a functional layer on a surface of the support layer SPL.

A vacuum deposition process or a plating process may be performed to form a metal layer on the first functional layer FCL1 and the second functional layer FCL2. For example, the first metal layer MEL1 may be formed on the first functional layer FCL1, and the second metal layer MEL2 may be formed on the second functional layer FCL2.

The following description will focus on some example embodiments of the present disclosure. The following example embodiments are provided to aid in understanding of the present disclosure and are not intended to limit the scope of the present disclosure.

### Embodiment 1

A polyethylene terephthalate (PET) film having a thickness of 5 µm was prepared. As shown in FIG. 7, the FET film was provided on its one surface with a tab having a length of 84 mm, a width of 15 mm, and a thickness of 2 µm. The tab was disposed to allow its portion to extend out of the FET film to achieve a length ratio of 1:1 between an exposed portion and a buried portion of the tab. Subsequently, copper plating was performed. The same method was performed to place a tab on another surface of the PET film, and copper plating was subsequently performed. A first metal layer and a second metal layer were each formed to have a thickness of 3 µm. Thus, a composite substrate was manufactured which includes tabs whose portions were buried between the metal layers and the FET film.

### Embodiment 2

A composite substrate was manufactured in the same method as in Embodiment 1, with a difference that a portion of the tab was buried to achieve a length ratio of 1:1 between the exposed portion and the buried portion of the tab.

### Embodiment 3

A composite substrate was manufactured in the same method as in Embodiment 1, with a difference that a portion of the tab was buried to achieve a length ratio of 1:10 between the exposed portion and the buried portion of the tab.

### Embodiment 4

A composite substrate was manufactured in the same method as in Embodiment 1, with a difference that a portion of the tab was buried to achieve a length ratio of 2:1 between the exposed portion and the buried portion of the tab.

### Embodiment 5

A composite substrate was manufactured in the same method as in Embodiment 1, with a difference that a portion of the tab was buried to achieve a length ratio of 1:2 between the exposed portion and the buried portion of the tab.

### Embodiment 6

A polyethylene terephthalate (PET) film having a thickness of 5 µm was prepared. As shown in FIG. 7, the FET film was provided on one surface thereof with a tab having a length of 84 mm, a width of 15 mm, and a thickness of 2 µm. The tab was disposed to allow a portion thereof to extend out of the FET film such that a length ratio between exposed and buried portions of the tab was 1:1. 2.5 wt% of a conductive material or a double-walled carbon nano-tube (average length: 50 µm, average diameter: 1 nm to 1 µm, and specific surface area: 250 to 300 m²/g), 0.3 wt% of hydrogenated nitrile butadiene rubber (HNBR) were added to 97.2 wt% of an N-methylpyrrolidone (NMP) solvent, and dispersed for 12 hours to prepare 2.8 wt% of adhesive slurry. The prepared adhesive slurry was coated and dried on a surface of the FET film on which the tab was disposed, thereby forming a first functional layer. The same method was performed to place a tab on another surface of the PET film, and then a second functional layer was formed. Each of the first functional layer and the second functional layer was formed to have a thickness of 300 nm. Subsequently, copper plating was performed on a top surface of each of the first functional layer and the second functional layer to form a first metal layer on the first functional layer and to form a second metal layer on the second functional layer. Each of the first metal layer and the second metal layer was formed to have a thickness of 3 µm. Thus, a composite substrate was manufactured which includes tabs whose portions were buried between the functional layers and the FET film.

### Comparative Example 1

A polyethylene terephthalate (PET) film having a thickness of 5 µm was prepared. A copper plating process was performed on opposite surfaces of the PET film to manufacture a composite substrate. A first metal layer was formed to have a uniform thickness on a top surface of the PET film, and a second metal layer was formed to have a uniform thickness on a bottom surface of the PET film. Each of the first metal layer and the second metal layer was formed to have a thickness of 1 µm. Thereafter, a tab the same as that used in Embodiment 1 was welded to an end portion of each of the first metal layer and the second metal layer. For example, the tab was not buried but welded to a top surface of each of the first metal layer and the second metal layer.

### Comparative Example 2

A composite substrate was manufactured in the same method as in Embodiment 1, with a difference that a length ratio of 11:1 was achieved between the exposed portion and the buried portion of the tab.

The properties of Embodiments and Comparative Examples were summarized and listed in Table 1.

**[Table 1]**

| | Length of exposed portion (mm) | Length of buried portion (mm) | Length ratio (exposed portion : buried portion) |
|---|---|---|---|
| Embodiment 1 | 42 | 42 | 1 : 1 |
| Embodiment 2 | 76.4 | 7.64 | 10 : 1 |
| Embodiment 3 | 7.6 | 76.4 | 1 : 10 |
| Embodiment 4 | 56 | 28 | 2 : 1 |
| Embodiment 5 | 28 | 56 | 1 : 2 |
| Embodiment 6 (addition of functional layer) | 42 | 42 | 1 : 1 |
| Comparative Example 1 | - | - | Ordinary welding |
| Comparative Example 2 | 77 | 7 | 11 : 1 |

After manufacturing cells including the composite substrates of Embodiments 1 to 4 and Comparative Examples 1 to 2, there were measured cell DC-IR and discharge efficiency according to the C-rate of the cell.

### 1) 0.2C Discharge Efficiency

A battery was charged at a constant current of 0.2 C until a battery voltage reached 4.2 V. A charge amount was then measured. The battery was discharged at a constant current of 0.2 C until a battery voltage reached 2.0 V. A discharge amount was then measured. Discharge efficiency (%) was calculated by dividing the measured discharge amount by the charge amount, and the value is shown in Table 2.

### 2) 1.0C Discharge Efficiency

A battery was charged at a constant current of 1.0 C until a battery voltage reached 4.2 V. A charge amount was then measured. The battery was discharged at a constant current of 1.0 C until a battery voltage reached 2.0 V. A discharge amount was then measured. Discharge efficiency (%) was calculated by dividing the measured discharge amount by the charge amount, and the value is shown in Table 2.

### 3) 2.0C Discharge Efficiency

A battery was charged at a constant current of 2.0 C until a battery voltage reached 4.2 V. A charge amount was then measured. The battery was discharged at a constant current of 2.0 C until a battery voltage reached 2.0 V. A discharge amount was then measured. Discharge efficiency (%) was calculated by dividing the measured discharge amount by the charge amount, and the value is shown in Table 2.

### 4) Measurement of Direct Current Internal Resistance (Cell DC-IR)

A voltage drop (V) was measured while a current flow at 1 C for 1 second under SOC 50 (charged to be 50% of charge capacity relative to 100% of entire battery charge capacity, which is 50% of discharged in a discharge state). A direct current internal resistance (DC-IR) was calculated from the result and is listed Table 2.

### Evaluation : Tab Bonding Strength

A gripper held the tab of the composite substrate according to Embodiments and Comparative Examples, and then a maximum shear stress was measured when the tab was separated or fractured. The maximum shear stress was defined as tab bonding strength, and the tab bonding strength is listed in Table 2.

**[Table 2]**

| Category | Discharge efficiency for each rate (%) | | | Cell DC-IR (mΩ) | Tab bonding strength (Kgf) |
|---|---|---|---|---|---|
| | 0.2C | 1C | 2C | | |
| Embodiment 1 | 100 | 91.6 | 84 | 10.26 | 1.8 |
| Embodiment 2 | 100 | 90.25 | 80.9 | 17.72 | 1.02 |
| Embodiment 3 | 100 | 91.3 | 82.6 | 10.5 | 2.04 |
| Embodiment 4 | 100 | 91 | 82.5 | 13.27 | 1.38 |
| Embodiment 5 | 100 | 92.49 | 86.2 | 9.457 | 1.89 |
| Embodiment 6 | 100 | 92.42 | 86 | 9.48 | 1.76 |
| Comparative Example 1 | 100 | 90.5 | 81.95 | 15.454 | 0.77 |
| Comparative Example 2 | 100 | 90.1 | 80.23 | 18 | 0.56 |

Referring to Table 2, it may be observed that, when the tab is buried between the metal layer and the support layer without being welded to the metal layer, desired or improved discharge efficiency for each rate and a reduced DC-IR are achieved to improve cell performance (see Embodiment 1 and Comparative Example 1). For example, referring to Embodiments 1 and 5, it may be observed that, when the length ratio of the buried portion to the exposed portion of the tab is 1 to 2, the discharge efficiency and DC-IR are significantly improved, and the tab bonding strength is remarkably increased, exceeding 1.8 Kgf or more. In addition, it may be observed that the internal resistance is slightly increased and the discharge efficiency is reduced when the length ratio of the buried portion to the exposed portion of the tab is greater than 2, and that the most desired or improved cell performance is accomplished in Embodiments 1 and 5 in which the length ratio of the buried portion to the exposed portion of the tab is 1 to 2 (see Embodiments 1, 3, and 5). Moreover, referring to Table 2, it may be observed that the buried tab has a substantially reduced bonding strength in the composite substrate of Comparative Example 2 in which the length ratio of the buried portion to the exposed portion of the tab is less than 0.1. Further, it may be observed that a noticeably increased DC-IR is achieved in the composite substrate of Comparative Example in which the length ratio of the buried portion to the exposed portion of the tab is greater than 10. In this sense, it may be ascertained that cell performance is markedly decreased.

In a composite substrate according to the present disclosure, a tab may be buried to achieve a reduced contact resistance. A rechargeable lithium battery including the composite substrate of the present disclosure may have desired or improved cell performance.

Although some example embodiments of the present disclosure have been discussed with reference to accompanying figures, it will be understood that various changes in form and details may be made therein without departing from the spirit and scope of the present disclosure. It will be apparent to those skilled in the art that various substitution, modifications, and changes may be thereto without departing from the scope and spirit of the present disclosure.

## Claims

1. A composite substrate (CPS) for a rechargeable lithium battery, the composite substrate (CPS) comprising:
a support layer (SPL);
a first metal layer (MEL1);
a second metal layer (MEL2);
wherein the support layer (SPL) is arranged in between the first metal layer (MEL1) and the second metal layer (MEL2);
wherein the composite substrate (CPS) further comprise at least one tab (TAB1, TAB2) buried between the support layer (SPL) and at least one of the first and second metal layers (MEL1, MEL2),
and wherein the tab (TAB1, TAB2) includes a buried portion (EMP) and an exposed portion (EXP).

2. The composite substrate (CPS) of claim 1, wherein a ratio of a length (Lx) in a first direction of the buried portion (EMP) to a length (Ly) in the first direction (D1) of the exposed portion (EXP) is in a range of 0.1 to 10.

3. The composite substrate (CPS) according to any of the preceding claims, wherein a thickness of the tab (TAB1, TAB2) is in a range of 1 µm to 5 µm.

4. The composite substrate (CPS) according to any of the preceding claims, wherein the support layer (SPL) comprises at least one of a polyethylene film, a polypropylene film, a polyvinylidene film, and a multi-layered film including a combination thereof.

5. The composite substrate (CPS) according to any of the preceding claims, wherein at least one of the first and second metal layers (MEL1, MEL2) comprise at least one of aluminum, aluminum alloys, copper, copper alloys, nickel, nickel alloys, titanium, titanium alloys, iron, iron alloys, silver, and silver alloys.

6. The composite substrate (CPS) according to any of the preceding claims, wherein a thickness of at least one of the first and second metal layers (MEL 1, MEL2) is in a range of 200 nm or greater to 5 µm or less.

7. The composite substrate (CPS) according to any of the preceding claims, wherein a thickness of the support layer (SPL) is in a range of 3 µm to 10 µm.

8. The composite substrate (CPS) according to any of the preceding claims, wherein:
the at least one tab (TAB1, TAB2) is configured to include at least two tabs (TAB1a, TAB1b) that are separated from each other in a second direction, the second direction (D2) being preferably orthogonal to the first direction (D1), and
an interval (W2) along the second direction (D2) between the at least two tabs (TAB1a, TAB1b) is in a range of 20 mm to 50 mm.

9. The composite substrate (CPS) according to any of the preceding claims, wherein the first metal layer (MEL1) is at least partially in direct contact to a first surface of the support layer (SPL), and wherein the second metal layer (MEL2) is at least partially in direct contact to a second surface of the support layer (SPL).

10. The composite substrate (CPS) according to any of claims 1 to 8, further comprising a first functional layer (FCL1) provided between the support layer (SPL) and the first metal layer (MEL1); and
a second functional layer (FCL2) provided between the support layer (SPL) and the second metal layer (MEL2).

11. The composite substrate of claim 10, wherein the first functional layer (FCL1) is at least partially in direct contact to a first surface of the support layer (SPL), and wherein the second functional layer (FCL2) is at least partially in direct contact to a second surface of the support layer (SPL) and/or wherein the at least one tab (TAB1, TAB2) is between the functional layer (FCL1, FCL2) and the support layer (SPL).

12. The composite substrate according to any of claims 10 or 11, wherein at least one of the first and second functional layers (FCL1, FCL2) includes at least one of a cellulose-based binder, a rubber-based binder, an acrylate-based binder, an imide-based binder, a polyvinylidene fluoride-based binder, a polyvinylpyrrolidone-based binder, a nitrile-based binder, an acetate-based binder, and a cyano-based binder; and/or
wherein at least one of the first and second functional layers (FCL1, FCL2) includes a carbon material including at least one of natural graphite, artificial graphite, carbon black, acetylene black, Ketjen black, carbon fiber, carbon nano-fiber, and carbon nano-tube.

13. A rechargeable lithium battery, comprising:
a composite substrate (CPS) configured according to any of the preceding claims,
and a battery cell (CEL1, CEL2) on the metal layer (MEL1, MEL2) of the composite substrate (CPS).

14. The rechargeable lithium battery of claim 13, wherein the composite substrate (CPS) is configured according to any of claims 10 to 12, and
wherein the at least one tab (TAB1, TAB2) is between the functional layer (FCL1, FCL2) and the support layer (SPL).

15. The rechargeable lithium battery according to any of claims 13 or 14, wherein the battery cell (CEL1, CEL2) comprises:
a first active material layer (ACT1) being in direct contact to the metal layer (MEL1, MEL2) of the composite substrate (CPS);
a separator (30) on the first active material layer (ACT1);
a second active material layer (ACT2) on the separator (30); and
a metal substrate (MES) on the second active material layer (ACT2).
